(19) **Europäisches Patentamt**

**European Patent Office**

**Office européen des brevets**

(11) Veröffentlichungsnummer: **0 445 618 B1**

(12) **EUROPÄISCHE PATENTSCHRIFT**

(45) Veröffentlichungstag der Patentschrift: **04.01.95**

(51) Int. Cl.⁶: **G01B 11/24**

(21) Anmeldenummer: **91102736.5**

(22) Anmeldetag: **25.02.91**

Die Akte enthält technische Angaben, die nach dem Eingang der Anmeldung eingereicht wurden und die nicht in dieser Patentschrift enthalten sind.

(54) **Verfahren und Vorrichtung zur berührungslosen Vermessung von Objektoberflächen.**

(30) Priorität: **09.03.90 DE 4007500**

(43) Veröffentlichungstag der Anmeldung:
**11.09.91 Patentblatt 91/37**

(45) Bekanntmachung des Hinweises auf die
Patenterteilung:
**04.01.95 Patentblatt 95/01**

(84) Benannte Vertragsstaaten:
**CH DE FR GB IT LI**

(56) Entgegenhaltungen:
**EP-A- 0 121 353**
**FR-A- 2 279 066**
**FR-A- 2 292 213**

(73) Patentinhaber: **Firma Carl Zeiss**

**D-73446 Oberkochen (DE)**

(84) Benannte Vertragsstaaten:
**CH DE FR IT LI**

(73) Patentinhaber: **CARL ZEISS-STIFTUNG HAN-
DELND ALS CARL ZEISS**

**D-89518 Heidenheim (Brenz) (DE)**

(84) Benannte Vertragsstaaten:
**GB**

(72) Erfinder: **Küchel, Michael, Dr.**
**Keplerstrasse 3**
**W-7082 Oberkochen (DE)**
Erfinder: **Hof, Albrecht, Dr.**
**Rohrwang Strasse 12**
**W-7080 Aalen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 445 618 B1

**Beschreibung**

Die Erfindung betrifft ein Verfahren und Vorrichtungen zur berührungslosen Vermessung von Objektoberflächen mit Hilfe von auf die Objektoberfläche projizierten Streifenmustern, die von einer Kamera detektiert und ausgewertet werden.

Es gibt bereits eine ganze Reihe verschiedener Verfahren, mit denen relativ große Bereiche einer Objektoberfläche bezüglich ihrer x-, y- und z-Koordinaten auf einmal vermessen werden, indem durch Projektion oder Schattenwurf eine regelmäßige, meist gitterförmige Struktur auf das Objekt aufbelichtet wird. Hierzu gehören die verschiedenen Varianten des unter dem Namen "Moiré-Topographie" bekannten Verfahrens, bei dem der infolge zweimaligen Lichtdurchganges durch ein Gitter gleicher Periode auftretende sogenannte Moiré-Effekt für die Gewinnung von Höheninformation der interessierenden Objektoberfläche ausgenutzt wird.

So wird beispielsweise in dem von Takasaki in Applied Optics 6 (1970), auf Seite 1467 beschriebenen "Schattenwurf"-Moiré-Verfahren die zu untersuchende Objektoberfläche durch ein davor gestelltes Amplitudengitter von einer möglichst punktförmigen Lichtquelle beleuchtet. Die derart struktiert beleuchtete Oberfläche wird dann von einem Objektiv und zwar nochmals durch das gleiche Gitter hindurch, auf einen Schirm abgebildet, wobei die Beleuchtungsstrahlen und die Abbildungsstrahlen einen Winkel ($\alpha$) einschließen. Da das auf die Objektoberfläche aufbelichtete Gitter entsprechend der Oberflächenform deformiert wird, entstehen aufgrund des Moiré-Effekts Konturlinien, die Information über die Tiefenausdehnung der Objektpunkte geben. Diese Konturlinien sind auch dann noch sichtbar, wenn die Grundfrequenz des zur Beleuchtung verwendeten Gitters selbst bei der Abbildung nicht mehr aufgelöst wird oder sogar gezielt "weggemittelt" wird, indem es während einer Aufnahme um eine oder mehrere volle Gitterperioden verschoben wird.

Eine weitere Variante der Moiré-Topographie-Verfahren ist das sogenannte Projektions-Moiré-Verfahren. Bei diesem Verfahren wird ein Gitter im Beleuchtungsstrahlengang eines Projektivs auf die Objektoberfläche abgebildet und die Objektoberfläche durch ein Objektiv auf ein zweites Gitter vor der verwendeten Aufnahmekamera abgebildet. Ein derartiges Verfahren ist z.B. in der EP-B1-0 121 353 beschrieben. Auch in dieser Verfahrensvariante ist es wieder möglich, die beiden Gitter, das Projektionsgitter und das zur Abbildung verwendete Gitter, synchron während einer Aufnahme zu verschieben, um Gitterunregelmäßigkeiten auszumitteln, ohne daß sich dabei die aufgrund des Moiré-Effektes entstehenden Konturlinien bzw. deren Lage im Raum ändert. Hierbei ist vorausgesetzt, daß die Gitter die gleiche Gitterkonstante besitzen und die Brennweiten von Projektiv und Objektiv gleich sind. Aus der genannten Patentschrift ist es außerdem bekannt, symmetrisch zum Meßstrahlengang zwei Projektoren beidseitig unter gleichem Abstand und gleichem Projektionswinkel anzuordnen, um durch die beidseitige Projektion überlappende und aneinander anschließende Gittermuster zu erzeugen und damit das Problem von Abschattungen bei der Vermessung von stark gekrümmten Objektoberflächen auszuschalten.

In der dritten bekannten Variante von Moiré-Topographie-Verfahren wird auf ein zweites Gitter vor der Aufnahmekamera verzichtet. Stattdessen übernimmt hier das Raster der Zeilen der Aufnahmekamera oder die Pixelperiode einer CCD-Kamera die Funktion des Decodierungsgitters. Dieses sogenannte "Scanning"-Moiré-Verfahren ist beispielsweise in Applied Optics, Vol. 16, Nr. 8 (1977) auf Seite 2152 beschrieben.

Neben den beschriebenen Verfahren der Moiré-Topographie ist es auch bekannt, das Objekt zu vermessen, indem direkt, die Höheninformation aus der Verformung des Streifenmusters auf der Objektoberfläche berechnet wird, ohne ein zweites Gitter vor der Kamera zu verwenden. Solche sogenannten "Streifenprojektionsverfahren" sind beispielsweise in der EP-A2-0 262 089, der US-PS 4 641 972, der US-PS 4 488 172 und der US-PS 4 499 492 beschrieben.

Sowohl bei den Moiré-Topographie-Verfahren als auch der Streifenprojektionsmethode ist es erforderlich, für die quantitative Auswertung der Streifenmuster bzw. Konturlinien zu Koordinatenmeßwerten die zyklische Helligkeitsvariation der Streifensysteme auf der Objektoberfläche zu messen. Dies wird im allgemeinen als Phasenmessung bezeichnet. Üblicherweise geht man hierbei so vor, daß die Lage des Projektionsgitters während einer Messung in mehreren Schritten um feste Beträge verschoben wird, die einer Phasenänderung von beispielsweise 90° oder 120° entsprechen.

Mit den bekannten Verfahren ist es jedoch nicht ohne weiteres möglich, größere Objekte aus dem Bereich der industriellen Fertigung ausreichend genau zu vermessen, insbesondere wenn diese Objekte Unstetigkeiten wie Kanten und Stufen aufweisen. Hierfür ist folgender Umstand verantwortlich:

Wegen der zentralperspektivischen Anordnung von Projektion und Beobachtung ist der Abstand aufeinanderfolgender Konturlinien nicht konstant sondern nimmt mit wachsender Tiefe des Objekts zu. Deshalb ist es ohne die Kenntnis des **absoluten** Abstandes der Objektoberfläche an mindestens einem Punkt auch nicht möglich, Aussagen über den Verlauf eines Profils einer stetigen Oberfläche zu gewinnen. Die

2

gängigen Phasenmeßmethoden berechnen den Objektabstand jedoch nur Modulo 2 $\pi$, d.h. sie liefern nur Relativwerte innerhalb einer Streifenordnungszahl. Mit diesen Phasenmeßmethoden ist es deshalb auch nicht möglich, die infolge von Kanten und Stufen auftretenden Sprungstellen der auszuwertenden, zyklischen Funktion zu beseitigen.

Zur Lösung des Problems ist bereits vorgeschlagen worden, mehrere Streifenmuster mit stark voneinander abweichender Streifenperiode auf das Objekt zu projizieren und so mit Hilfe der längeren Streifenperiode den Bereich, in dem die Streifenphase eindeutig ist, zu vergrößern. Hierzu ist in der US-PS 4 488 172 ein zweiter Projektor vorgesehen, der ein zweites Streifenmuster mit achtfach längerer Periode projiziert. Für die Auswertung muß das zur Projektion benutzte Gitter jedoch mit einer gegenüber dem Gitter im anderen Projektor achtfach höherer Geschwindigkeit bewegt werden. Hierbei geht die feste räumliche Zuordnung der beiden Gitter zueinander verloren, die zur Projektion der Streifenmuster benutzt werden. Diese Zuordnung ist jedoch wichtig, wenn hochgenaue Messungen gemacht werden sollen.

Ein Verfahren bzw. Vorrichtungen gemäß den Oberbegriffen der Ansprüche 1, 6 und 9 ist bzw. sind aus der EP-A2-0 262 089 bekannt. Die zwei verschiedenen Streifenmuster werden dadurch erzeugt, daß zwei Gitter gleicher Periode aufeinander gelegt und in unterschiedlichem Ausmaß gegeneinander verdreht werden, so daß die daraus resultierenden auf das Objekt projizierten Moiré-Streifenmuster stark voneinander abweichende Periodizitäten besitzen. Nachteilig hieran ist unter anderem, daß zur Erzeugung der Streifenmuster unterschiedlicher Periode die Gitter mechanisch verstellt werden und es deshalb nicht möglich ist, die Streifenmuster im Videotakt schnell hintereinander zu projizieren.

Es ist die Aufgabe der vorliegenden Erfindung, ein Verfahren und eine Vorrichtung der eingangs genannten Art zu schaffen, das eine eindeutige, absolute Abstandsmessung im gesamten Meßbereich gewährleistet und sich durch eine hohe Meßgenauigkeit sowie hohe Meßgeschwindigkeit auszeichnet.

Diese Aufgabe wird durch die in den Ansprüchen 1, 6 und 9 angegebenen Merkmale gelöst. Weitere vorteilhafte Ausgestaltungen ergeben sich aus den Merkmalen der abhängigen Ansprüche.

Dadurch, daß mehrere Streifenmuster mit gleicher oder nur leicht voneinander abweichender Streifenperiode projiziert und die Schwebungsfrequenz zwischen den Streifenmustern ausgewertet wird, ist es möglich, die für die Projektion benutzten Gitter auch dann, wenn diese z.B. für die Phasenmessung oder aus anderen Gründen bewegt werden, in einer festen räumlichen Zuordnung zu halten. Beispielsweise können alle Gitter auf einem gemeinsamen Träger aufgebracht werden. Dies kommt der Genauigkeit der Abstandsmessung zugute, da die Relativlage der Gitter zueinander von Umwelteinflüssen unbeeinflußt bleibt.

Erfindungsgemäß werden die Streifenmuster bei der Aufnahme durch die Kamera z.B. durch Zeitmultiplexverfahren oder Projektion von farblich unterschiedlichen Mustern voneinander getrennt einem Bildverarbeitungsrechner zugeführt und dann die Schwebungsfrequenzen unterschiedlicher effektiver Wellenlänge erst im Rechner, nämlich gebildet. Dadurch überlagern sich die Intensitäten der projizierten Streifenmuster nicht, so daß die jeweils einem Gitter zugeordneten Streifen eindeutig identifiziert und einzeln ausgewertet werden können, d.h. ihre Phase exakt bestimmt werden kann.

Zweckmäßig ist es, wenn die Schwebungsfrequenzen aus den Differenzen der Streifenphasen der Streifenmuster, gebildet werden.

Es ist vorteilhaft, drei Gitter gleicher Periode unter verschiedenen Winkeln auf das Objekt zu projizieren. Auf diese Weise lassen sich zwei Schwebungsfrequenzen mit sehr unterschiedlicher effektiver Wellenlänge aus den Phasendifferenzen je zwei projizierter Streifenmuster bilden, ohne daß Gitter mit unterschiedlicher Gitterkonstante benötigt werden. Vielmehr genügt es, einfach den Projektionswinkel zwischen zwei Gittern klein gegenüber dem Projektionswinkel zweier anderer Gitter zu halten. Die auszuwertenden Schwebungsfrequenzen besitzen dann effektive Wellenlängen, die im Verhältnis der Projektionswinkel zueinander stehen.

Gitter gleicher Periode lassen sich außerdem sehr einfach herstellen und beispielsweise in einem Fertigungsprozeß nebeneinander auf einem gemeinsamen Gitterträger aufbringen. Sie liegen zweckmäßig in der gleichen Ebene, so daß die zur Auswertung der Streifenmuster erforderlichen Rechenvorgänge vereinfacht sind.

Es ist jedoch auch möglich, die Schwebungsfrequenz mit der größeren Wellenlänge dadurch zu erzeugen, daß zwei Gitter mit nur leicht voneinander unterschiedlicher Periode projiziert werden. Zweckmäßig werden hierfür zwei Projektoren vorgesehen und mit jedem der beiden im Winkel zueinander angeordneten Projektoren jeweils die beiden Gitter mit leicht unterschiedlicher Periode farblich oder polarisationsoptisch getrennt projiziert. In diesem Falle kann auf die dritte Projektionsoptik verzichtet werden.

Nachfolgend werden vorteilhafte Ausführungsformen der Erfindung anhand der Figuren 1 - 5 näher erläutert.

Fig. 1      ist eine Prinzipskizze, die den optischgeometrischen Aufbau eines ersten Ausführungsbeispiels der Erfindung zeigt:

Fig. 2    ist eine perspektivische Darstellung der wesentlichen Bauteile der in Fig. 1 vereinfacht skizzierten Vorrichtung;

Fig. 3    ist eine Prinzipskizze eines zweiten, alternativen Ausführungsbeispiels;

Fig. 4    ist eine perspektivische Darstellung der wesentlichen Bauteile der in Fig. 3 vereinfacht skizzierten Vorrichtung;

Fig. 5a-b    sind Teilschaltbilder des zur Signalauswertung der Vorrichtung nach Fig. 1 und 2 benutzten Auswerterechners.

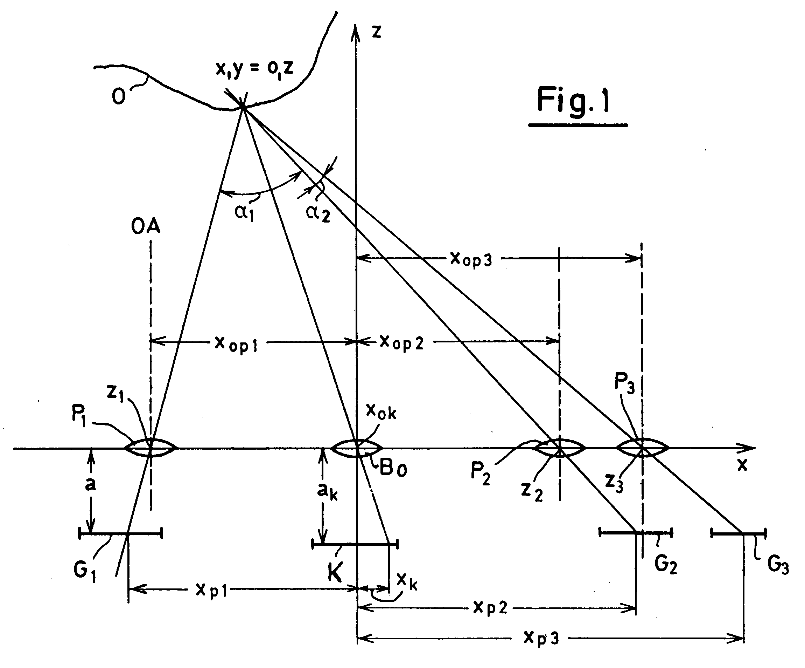

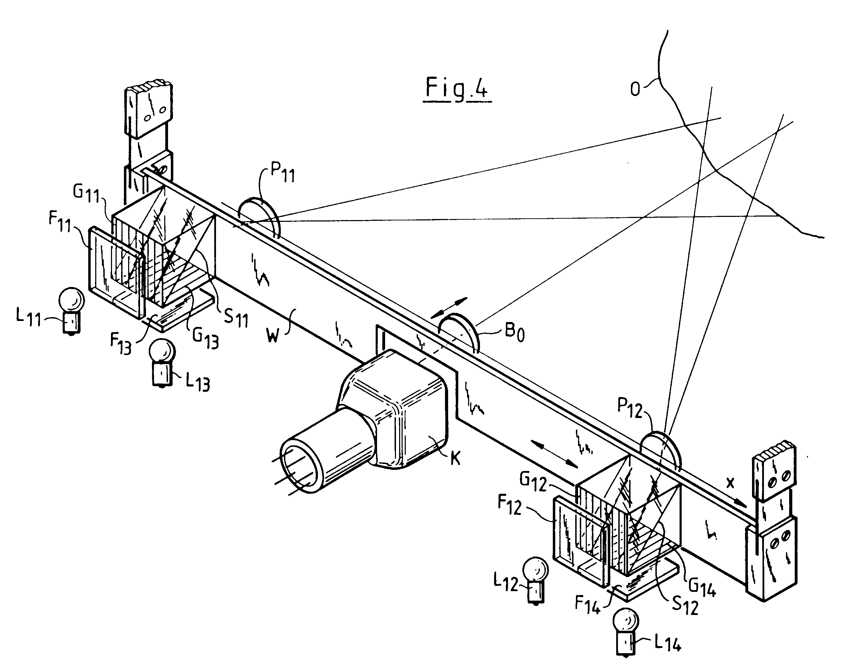

In der schematischen Darstellung nach Fig. 1 ist ein Aufbau dargestellt, der im wesentlichen aus drei Projektoren mit den Projektionsoptiken $(P_1)$, $(P_2)$ und $(P_3)$ und drei Gittern $(G_1)$, $(G_2)$ und $(G_3)$ mit jeweils gleicher Gitterperiode besteht, die im Abstand (a) hinter den Projektionsoptiken $(P_1 - P_3)$ angeordnet sind . Der Kamerasensor ist mit (K) bezeichnet und befindet sich mit dem vorgesetzten Beobachtungsobjektiv (Bo) zwischen den Projektoren $(P_1)$ und $(P_2)$ im Anstand $(a_k)$ hinter dem Beobachtungsobjektiv (Bo). Während die Projektoren $(P_1)$ und $(P_2)$ nun unter einem relativ großen Winkel $(\alpha_1)$ von ca. 30° zueinander geneigt sind, schließen die beiden nebeneinander angeordneten Projektoren $(P_2)$ und $(P_3)$ einen relativ kleinen Winkel $(\alpha_2)$ von beispielsweise 0,5° ein. Gleichzeitig ist der Winkel zwischen den beiden nebeneinander angeordneten Projektoren $(P_2, P_3)$ klein gegenüber dem Winkel, den die Projektoren $(P_2, P_3)$ mit der Achse der Kamera (K) einschließen. Durch diese Anordnung sind zwei Sätze von Ebenen konstanter Phasendifferenz definiert, nämlich die Phasendifferenzen der Streifenmuster der beiden Projektoren $(P_1)$ und $(P_2)$ oder $(P_1)$ und $(P_3)$ sowie die Phasendifferenzen der beiden Streifenmuster der Projektoren $(P_2)$ und $(P_3)$, wobei den beiden Sätzen unterschiedliche effektive Wellenlängen $(\lambda_{eff})$ in z-Richtung zugeordnet werden können. Die effektive Wellenlänge $(\lambda_{eff})$ wird durch die Gitterkonstante der Gitter $(G_1)$, $(G_2)$ und $(G_3)$ und den Winkel $(\alpha_1)$ bzw. $(\alpha_2)$ zwischen den Projektionsachsen der jeweiligen Projektoren bestimmt und hängt, da die Gitterkonstanten der Gitter $(G_1)$ bis $(G_3)$ gleich sind, deshalb nur von den Winkeln $(\alpha_1)$ und $(\alpha_2)$ ab. Nachfolgend werden Formeln abgeleitet, aus denen sich die Objektkoordinaten (x), (y) und (z) aus den von den drei Projektoren $(P_1)$, $(P_2)$ und $(P_3)$ projizierten Streifenmustern für die einzelnen Punkte der Objektoberfläche berechnen lassen. Hierfür ist vorausgesetzt, daß sich die Projektionszentren $(Z_1)$, $(Z_2)$ und $(Z_3)$ der Projektionsobjektive auf einer sich in x-Richtung erstreckenden Geraden liegen und die drei Gitter $(G_1)$ bis $(G_3)$ im gleichen Abstand (a) hinter diesen Geraden angeordnet sind. Die Gitter sind beispielsweise wie in Fig. 4 skizziert auf einem gemeinsamen Träger (W) aus Glas oder einem Material mit geringem thermischen Ausdehnungskoeffizienten wie z.B. Zerodur angeordnet und können gemeinsam relativ zur CCD-Kamera (K) in Richtung der Geraden x mit Hilfe einer Federwippe spielfrei bewegt werden. Die photoempfindliche Fläche der Kamera, d.h. der CCD-Sensor ist im Abstand $(a_K)$ hinter dem Beobachtungsobjektiv (Bo) angeordnet.

Durch den beschriebenen Aufbau ist die Geometrie des Meßgeräts im wesentlichen bestimmt. Die z.B. an einem exemplarischen Punkt (x, y = 0,z) projizierten Gitterorte $(x_{p1}, x_{p2}, x_{p3})$ werden mit der Videokamera (K), z.B. einer CCD-Kamera, beobachtet. Das Zentrum $(x_{0k})$ des Beobachtungsobjektivs (Bo) der Kamera legt den Ursprung des von den Projektoren $(P_1)$ bis $(P_3)$ vorbestimmten Koordinatensystems fest.

4

Durch Betrachten ähnlicher Dreiecke erhält man für die Projektoren

$$\frac{x_{p1} - x_{op1}}{a} = \frac{x - x_{op1}}{z} \qquad (1)$$

$$\frac{x_{p2} - x_{op2}}{a} = \frac{x - x_{op2}}{z} \qquad (2)$$

$$\frac{x_{p3} - x_{op3}}{a} = \frac{x - x_{op3}}{z} \qquad (3)$$

und für die Kamera

$$\frac{x_k}{a_k} = \frac{x}{z} \qquad (4)$$

Die Kombination der Kameragleichung (4) mit den Projektionsgleichungen (1) - (3) liefert

$$z = \frac{x_{op1} \cdot a}{(n_1 + \delta_1)\, P + x_k \frac{a}{a_k}} \qquad (5)$$

$$z = \frac{x_{op2} \cdot a}{(n_2 + \delta_2)\, P + x_k \frac{a}{a_k}} \qquad (6)$$

$$z = \frac{x_{op3} \cdot a}{(n_3 + \delta_3)\, P + x_k \frac{a}{a_k}} \qquad (7)$$

wobei die Differenzen ($x_{opi}$-$x_{pi}$, i = 1..3) als das ($n_i + \delta_i$)-fache der Streifenperiode (P) mit ($n_i$) als einem Element der natürlichen Zahlen und ($\delta_i < 1$) ausgedrückt sind.

Betrachtet man den Zusammenhang zwischen den Beobachtungen der Streifenmuster zweier Projektoren und bildet Differenzen, so erhält man aus (5), (6) und (7)

$$z = \frac{(x_{op1} - x_{op2}) \cdot a}{(n_1 - n_2 + \delta_1 - \delta_2) \, P} \qquad (8)$$

$$z = \frac{(x_{op1} - x_{op3}) \cdot a}{(n_1 - n_3 + \delta_1 - \delta_3) \, P} \qquad (9)$$

$$z = \frac{(x_{op2} - x_{op3}) \cdot a}{(n_2 - n_3 + \delta_2 - \delta_3) \, P} \qquad (10)$$

oder

$$z = \frac{K_1}{N_1 - \triangle_1} \qquad (11)$$

$$z = \frac{K_2}{N_2 - \triangle_2} \qquad (12)$$

$$z = \frac{K_3}{N_3 - \triangle_3} \qquad (13)$$

wobei $K_1$, $K_2$, $K_3$ Gerätekonstanten sind, $N_1 = n_1 - n_2$, $N_2 = n_1 - n_3$, $N_3 = n_2 - n_3$ und $\triangle_1 = \delta_1 - \delta_2$, $\triangle_2 = \delta_1 - \delta_3$, $\triangle_3 = \delta_2 - \delta_3$ ist.

Die Formeln (11), (12) und (13) beschreiben Ebenen konstanter Phasendifferenz $(N_i - \triangle_i)$ zwischen je zwei Projektionen, die parallel zur x/y-Ebene liegen. Sie hängen nicht vom Beobachtungsort $(x_k, y_k)$ auf der Kamera ab. Zur Messung müssen die ganzen Zahlen $(N_1, N_2, N_3)$ und die Bruchteile $(\triangle_1, \triangle_2, \triangle_3)$ bestimmt werden.

Den Flächen gleicher Phasendifferenz, die durch die Gleichungen (11), (12) und (13) beschrieben sind, lassen sich unterschiedliche effektive Hellenlangen $(\lambda_{eff})$ der Phasendifferenzen zuordnen. Fur die aus einer Kombination der Projektoren $(P_1)$ und $(P_2)$ gewonnene Gleichung (11) und die aus einer Kombination der Projektoren $(P_1)$ und $(P_3)$ gewonnene Gleichung (12) liegen relativ kurze effektive Wellenlängen vor, wahrend dem durch Gleichung (13) beschriebenen Fall der Kombination der beiden Projektoren $(P_2)$ und $(P_3)$ eine vergleichsweise große Wellenlänge $(\lambda_{eff})$ zugeordnet werden kann. Wesentlich ist, daß die verschiedenen effektiven Wellenlängen über die Winkel $(\alpha_1)$, $(\alpha_2)$ zwischen den Projektoren hochstabil eingestellt werden können.

Für die Auswertung der Messungen in einem Rechner bietet es sich an, die Formeln (11), (12) und (13) noch einmal umzuformulieren:

$$z = \frac{K_1}{\mathrm{int}\left(\dfrac{K_1}{K_3} N_3 + \dfrac{K_1}{K_3}\Delta_3 - \Delta_1\right) + \Delta_1} \qquad (14)$$

$$z = \frac{K_2}{\mathrm{int}\left(\dfrac{K_2}{K_3} N_3 + \dfrac{K_2}{K_3}\Delta_3 - \Delta_2\right) + \Delta_2} \qquad (15)$$

Zur vollständigen Bestimmung der Koordinaten (x), (y) und (z) eines Bildpunktes werden die Lateralkoordinaten (x) und (y) über das Abbildungsgesetz mit

$$x = \frac{x_k}{a_k} \cdot z \qquad (16)$$

$$y = \frac{y_k}{a_k} \cdot z \qquad (17)$$

berechnet.

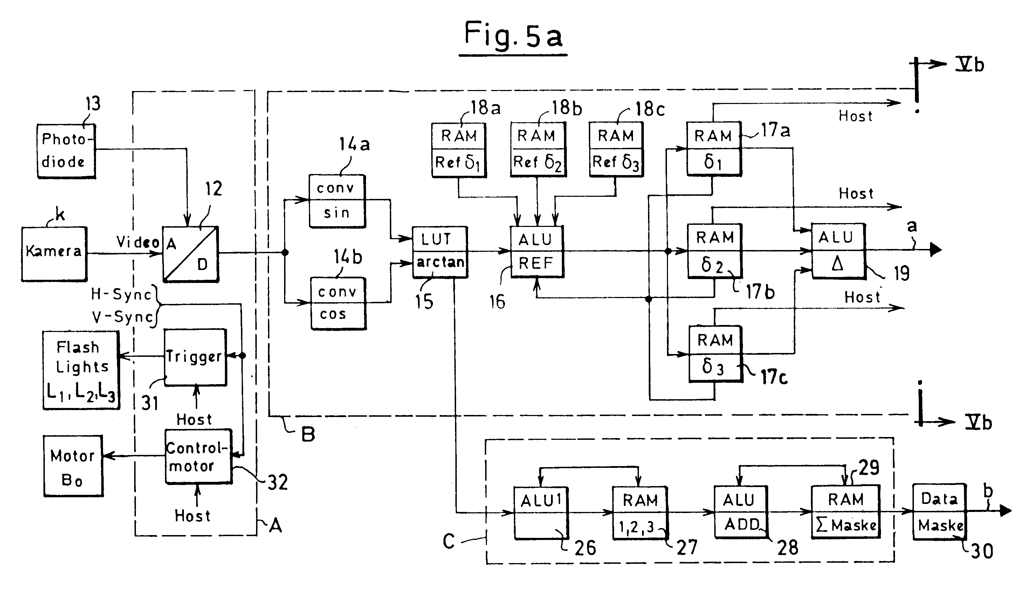

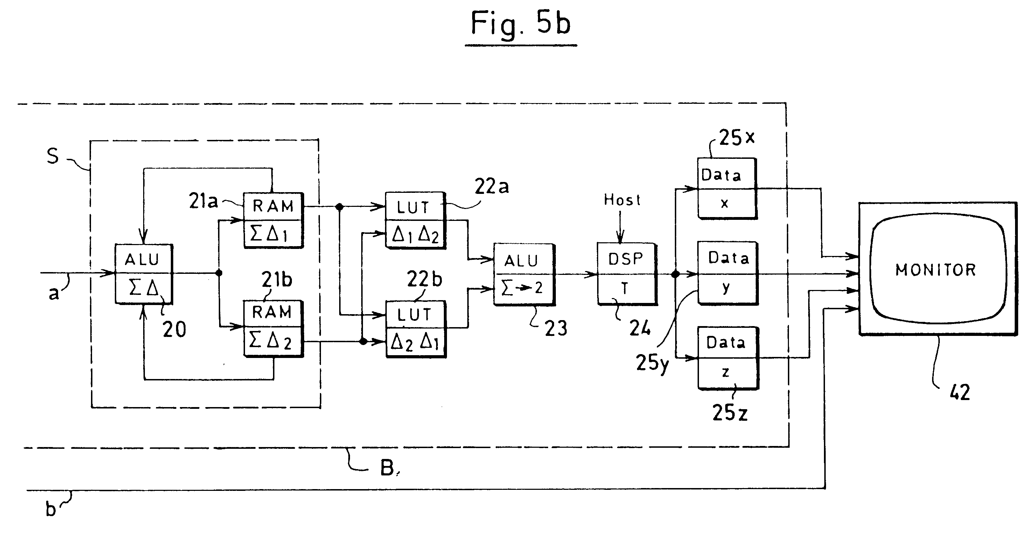

Zur Auswertung werden die von den drei Projektoren $(P_1)$ bis $(P_3)$ in Zeitmultiplexbetrieb projizierten Streifenmuster der durch das Objektiv (Bo) von der Kamera (K) aufgenommen und getrennt in verschiedene Bildspeicher eingelesen. Die Berechnung der Objektkoordinaten (x), (y) und (z) nach den angegebenen Formeln geschieht dann wie nachstehend anhand von Fig. 5a und 5b beschrieben in einem hardwaremäßig aufgebauten Bildverarbeitungsrechner. Dieser Rechner verarbeitet die Bilddaten in Videoechtzeit. Er ist hierzu in Form einer Pipelinestruktur auch mit teilweise parallelen Datenpfaden aufgebaut und wird von einem Host-Rechner mit bekannter von Neumann-Struktur, d.h. beispielsweise einem kommerziell erhältlichen Prozeßrechner gesteuert. Für die weitere Beschreibung des Auswerterechners wird auf die Figuren 5a und 5b Bezug genommen, in denen dieser im Blockschaltbild dargestellt ist.

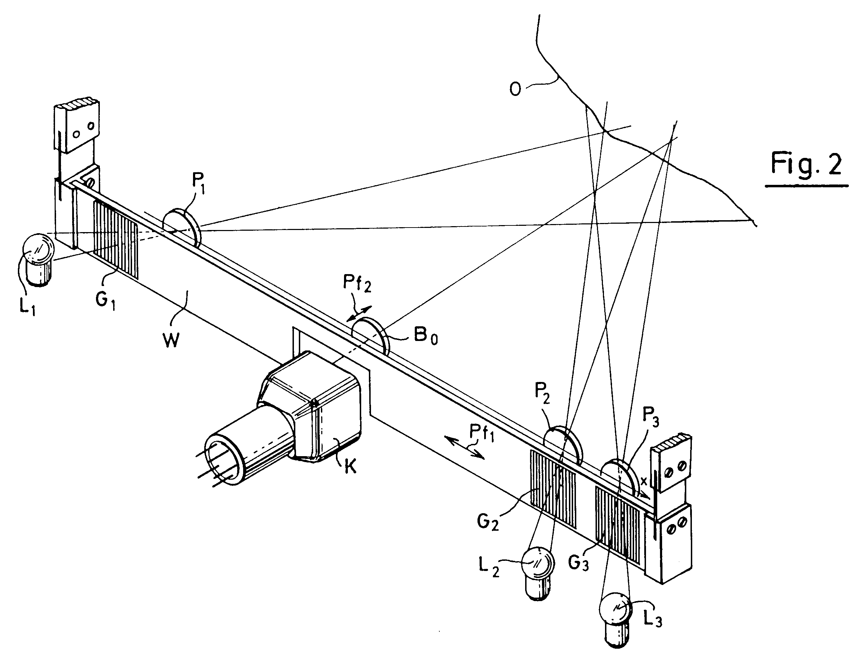

Dort sind die drei unterschiedlichen Funktionsbaugruppen mit (A), (B) und (C) bezeichnet. Die Funktionsbaugruppe (A) stellt die Schnittstelle zu den externen Sensoren bzw. zu steuernden Teilen der Vorrichtung dar. Sie enthält einen Analog/Digitalwandler (12), der das Signal der Kamera (K) in Videoechtzeit digitalisiert. Der Verstärkungsfaktor ist hierbei abhängig vom Ausgangssignal einer Photodiode (13) gesteuert, so daß das Videosignal an unterschiedliche Helligkeitsverhältnisse bzw. unterschiedliche Energien der als Blitzlampen ausgebildeten Lichtquellen $(L_1)$ bis $(L_3)$ (siehe Fig. 2 und 4) angepaßt werden kann, die zur Beleuchtung der Gitter $(G_1 - G_3)$ dienen. Zur Ansteuerung der Blitzlampen $(L_1)$ bis $(L_3)$ enthält die Schnittstellenkarte (A) eine Triggerschaltung (31), die mit der Kamera (K) synchronisiert ist. Die Schnittstellenkarte (A) enthält außerdem die Steuerelektronik (32) für den Motor, mit dem das Objektiv (Bo) der Kamera (K) auf unterschiedliche Objektbereiche, wie in Fig. 2 durch den Pfeil $(Pf_2)$ angedeutet, scharf gestellt werden kann. Die Abfolge der Blitze und die Verstellung des Objektivs wird entsprechend einem festgelegten Meßprogramm des in der Fig. 5 nicht dargestellten konventionellen Host-Rechners gesteuert. Dies ist durch die beiden Pfeile "Host" symbolisiert, die auch an anderer Stelle in der Schaltung nach Fig. 5a und 5b auftauchen.

Das digitalisierte Videosignal, das den A/D-Wandler (12) verläßt, ist den Eingängen zweier parallel geschalteter Konvolutionsbausteine (14a) und (14b) in der Funktionsbaugruppe (B) zugeführt. Diese beiden Bausteine (14a) und (14b) führen eine Faltungsoperation durch, um den Sinus bzw. Kosinus der Streifenphase an den einzelnen Bildpunkten aus dem Intensitätsverlauf des Signals in der näheren Umgebung der Bildpunkte zu bestimmen. Entsprechende Algorithmen sind beispielsweise im "Optical Engineering", Vol. 23, No. 4 (Juli/August 1984) auf Seite 391 - 395 beschrieben. Die Ausgänge der Bausteine (14a) und (14b) sind einer Schaltung (15) zugeführt, in der die Streifenphase aus dem Sinus und dem Kosinus berechnet wird. Hierzu ist in einer der Schaltung (15) zugeordneten Tabelle die Funktion Arcustangens abgelegt. Gleichzeitig werden auf der Basis der in der Schaltung (15) berechneten Phasenwerte ungültige Meßwerte maskiert. Ungültige Meßwerte sind solche, die bei entweder zu hoher oder zu geringer Beleuchtungsintensität aufgenommen worden sind und deren Pegel deshalb über oder unter einem vorbestimmten Grenzwert liegt. Die Maske, die diese Bildbereiche maskiert, wird in einem parallel zum Meßdatenstrom in dem mit (C) bezeichneten Schaltungsteil erzeugt, wie nachfolgend noch beschrieben werden wird.

Der Ausgang der Schaltung (15) ist über eine Berechnungsstufe (16) (arithmetic logic unit) drei parallel geschalteten Bildspeichern (17a-c) zugeführt. Dort werden die in der Schaltung (15) berechneten Streifenphasen $(\delta_1)$, $(\delta_2)$ und $(\delta_3)$ der von den drei Projektoren $(P_1)$, $(P_2)$ und $(P_3)$ im Zeitmultiplexbetrieb nacheinander projizierten Streifenmuster zwischengespeichert. In drei weiteren Bildspeichern (18a), (18b) und (18c) sind Korrekturwerte abgelegt, die in einem Kalibrierverfahren gewonnen wurden und die von der Unvollkommenheit des geometrisch-optischen Aufbaus der Vorrichtung herrührenden Verzerrungen der Streifenphase der durch die drei Projektoren projizierten Muster beschreiben. Diese Korrekturwerte werden in der Recheneinheit (16) von den Streifenphasen $(\delta_1)$, $(\delta_2)$ und $(\delta_3)$ subtrahiert. Die so korrigierten Phasenwerte gelangen wieder in die Bildspeicher (17a, b und c) und werden danach in einer zweiten Recheneinheit (19) weiterverarbeitet, die die Differenzen $(\Delta_1 = \delta_1 - \delta_2)$ und $(\Delta_2 = \delta_1 - \delta_3)$ berechnet. Diese Werte sind zur Berechnung des Objektabstandes (z) nach den Formeln (11), (12) und (13) erforderlich. Dabei ist zu berücksichtigen, daß $(\Delta_3)$ sich als Differenz aus $(\Delta_2 - \Delta_1)$ ergibt.

Auf die Recheneinheit (19) folgt eine Summationsstufe (S) (siehe Fig. 5b), die aus einer Recheneinheit (20) und zwei RAM-Speichern (21a) und (21b) besteht. In diesen Speichern (21a) und (21b) werden die Phasendifferenzen $(\Delta_1)$ und $(\Delta_2)$ für jeden Bildpunkt aufakkumuliert. Dies kann z.B. in einer Integer-Arithmetik so erfolgen, daß die 8 Bit Eingangswerte der die Phasendifferenzen $(\Delta_1)$ und $(\Delta_2)$ repräsentierenden Signale in einem Datenbereich von 16 Bit in den Speichern (22a) und (22b) aufsummiert werden. Auf diese Weise ist es möglich, die aus 255 Bildern gewonnenen Phasendifferenzen durch Summation zu mitteln und damit hinsichtlich der Genauigkeit der Phasenmessung zu verbessern.

Die Ausgänge der Bildspeicher (21a) und (21b) sind zwei darauffolgenden weiteren Recheneinheiten (22a) und (22b) zugeführt, in denen über weitere Tabellen (look-up-tables) die Formeln zur Berechnung des Objektabstandes gemäß Gleichung (14) und (15) bereitgehalten sind. Diese Recheneinheiten (22a) und (22b) berechnen zwei Werte für den Objektabstand (z), die in einer darauffolgenden Rechenstufe (23) nochmals gemittelt werden. In einem darauffolgenden digitalen Signalprozessor (24) werden die Koordinaten (x) und (y) der Bildpunkte gemäß Gleichung (16) und (17) aus den Meßwerten für (z) und den vom Host-Rechner gelieferten Gerätekonstanten $(x_k)$, $(y_k)$ und $(a_k)$ berechnet und einer Ausgabeeinheit (25) zugeführt.

Mit der beschriebenen Methode wird die Höheninformation über das zu vermessende Objekt absolut gewonnen und nicht nur Modulo 2 $\pi$ der Streifenphase.

Das vorstehend beschriebene Auswerteverfahren setzt voraus, daß die von der Kamera (K) gelieferten Signale im linearen Bereich der Kamerakennlinie erzeugt werden, daß insbesondere keine Unter- oder Übersteuerung vorkommt. Weiterhin ist es für das beschriebene Verfahren erforderlich, daß innerhalb einer Aufnahmeserie der drei von den Projektoren $(P_1)$, $(P_2)$ und $(P_3)$ projizierten Streifenmuster ein Phasenwert nur dann weiterverarbeitet wird, wenn die Phasenwerte in allen drei Bildern der Sequenz für den bestimmten Bildpunkt gültig sind. Diese Rechenoperationen werden im Schaltungsteil (C) von Fig. 5a durchgeführt. Ob ein Meßwert gültig oder ungültig ist, wird in einem Bit des look-up-tables LUT in der Recheneinheit (15) abgefragt. Die "und" Verknüpfung über die drei Videobildsequenzen wird in der Rechenstufe (26) zusammen mit einem rekusiv geschalteten RAM-Baustein (27) erzeugt. In der anschließenden Rechenstufe (28) wird die Anzahl der gültigen Meßwerte an jedem Bildpunkt berechnet und in einem nachfolgenden RAM-Baustein (29) gespeichert. Unter der Anzahl der Meßwerte ist hierbei die Anzahl der Videobilder zu verstehen, über die die Phasendifferenzen im Summationsbaustein (S) von Fig. 5b aufsummiert werden. Setzt man eine geeignet gewählte Grenze, die eine Mindestanzahl von gültigen Messungen für jeden Bildpunkt beschreibt, dann werden all die Bildpunkte ausgeblendet, in denen die Anzahl der gültigen Messungen unterhalb dieser Grenze liegt und alle übrigen Bildpunkte werden in die Ergebnisberechnung miteinbezogen. Die hierdurch beschriebene, über die Bildpunkte gelegte Datenmaske ist durch das mit (30) bezeichnete Quadrat in Fig. 5a symbolisiert. Mit ihr kann der zur Ausgabe dienende Videomonitor (42) an den entsprechenden Bildpunktstellen dunkelgesteuert werden.

Der anhand von Fig. 5a und 5b beschriebene in Hardware realisierte Auswerterechner stellt eine Lösung dar, mit der die Signale der Kamera zur Durchführung des erfindungsgemäßen Verfahrens verarbeitet werden können. Diese Lösung ist darauf zugeschnitten, daß die Streifenmuster durch die drei Projektoren $(P_1)$, $(P_2)$ und $(P_3)$ im Zeitmultiplexbetrieb nacheinander projiziert und die Bilder dann von der Kamera (K) nacheinander aufgenommen und verarbeitet werden. Es ist jedoch auch möglich, die Streifenmuster beispielsweise in verschiedenen Farben gleichzeitig zu projizieren und mit drei über Farbteiler getrennten Kameras gleichzeitig aufzunehmen. Dann müssen allerdings der Eingangskanal, d.h. der A/D-Wandler (12), die Konvultionsbausteine (14a) und (14b), die Recheneinheiten (15) und (16), die im Zeitmultiplexbetrieb arbeiten, in entsprechender Anzahl von drei Stück parallel ausgeführt werden. Dies hat zwar höhere Kosten zur Folge, bietet jedoch auch eine größere Bandbreite in der Verarbeitungsfrequenz. Umgekehrt sind die beschriebenen Rechenoperationen auch auf einem passend programmierten, geeignet leistungsfähigen, sequentiell arbeitendem Rechner herkömmlicher Struktur ablauffähig, allerdings dort nur mit erheblich längeren Laufzeiten, so daß eine Echtzeitverarbeitung der Videosignale in diesem Falle nicht zu erzielen ist.

Dadurch, daß bei dem beschriebenen Verfahren die z-Messung immer als Differenz zweier Projektionen, beispielsweise der Streifenmuster der Projektoren ($P_1$) und ($P_2$) oder der Projektoren ($P_2$) und ($P_3$) gebildet wird, kann der Träger (W) mit den Gittern ($G_1$) bis ($G_3$) (siehe Fig. 4) in Richtung des Pfeils ($Pf_1$) verschoben werden, ohne daß die bei der Signalauswertung erhaltenen z-Werte beeinflußt werden. Hierbei können nun mehrere Messungen mit verschiedenen Stellungen des Gitterträgers (W) gemacht werden, bei denen entsprechend auch unterschiedliche Bereiche der Gitter beleuchtet sind. Da die Einzelmessungen hinsichtlich der Phasendifferenzen ($\Delta_i$) über alle Bilder aufaddiert und hierbei gemittelt werden, wirkt sich das so aus, daß statistische Fehler, herrührend entweder von Fertigungsungenauigkeiten der Gitter oder herrührend durch die einmalige Anwendung des Auswertealgorithmus, mit $\sqrt{N}$ verbessert werden, wenn N die Anzahl der Messungen ist.

Gleichzeitig kann die Beleuchtungsintensität von dem Wert Null bis zur Sättigung durchgesteuert werden, damit möglichst von allen Objektpunkten, deren Reflektionsvermögen ja durchaus unterschiedlich sein kann, brauchbare Meßwerte erhalten werden können. Die Maskierungselektronik in Teil (C) der Schaltung von Fig. 5a sorgt hierbei dafür, daß alle Messungen im nicht-linearen Bereich der Kamera (K) verworfen werden.

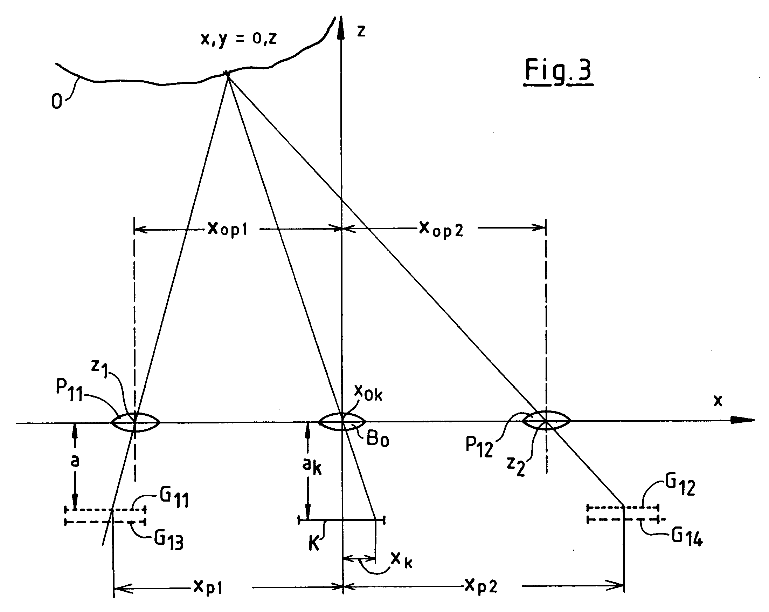

In den Fig. 3 und 4 ist ein zweites, alternatives Ausführungsbeispiel der Erfindung dargestellt. In Analogie zu Fig. 1 zeigt die Skizze des zweiten Ausführungsbeispieles in Fig. 3 den prinzipiellen Aufbau des Meßgerätes, der im wesentlichen aus zwei Projektionsoptiken ($P_{11}$) und ($P_{12}$) und vier Gittern ($G_{11}/G_{13}$) und ($G_{12}/G_{14}$) besteht. Der Kamerasensor ist wieder mit (K) bezeichnet und befindet sich mit dem vorgesetzten Beobachtungsobjektiv (Bo) zwischen den Projektoren ($P_{11}$) und ($P_{12}$). Im hier beschriebenen Falle enthält jeder der beiden Projektoren ($P_{11}$) und ($P_{12}$) zwei Gitter und die Gitterkonstanten bzw. Gitterperioden je zweier Gitter ($G_{11}$) und ($G_{12}$) sowie ($G_{13}$) und ($G_{14}$) sind paarweise gleich. Hingegen unterscheiden sich die Gitterkonstanten bzw. Perioden der Gitter ($G_{11}$) und ($G_{13}$) bzw. ($G_{12}$) und $G_{14}$) innerhalb eines Projektors geringfügig. Beispielsweise besitzt das Gitter ($G_{11}$) eine Gitterkonstante von 25 Linienpaaren / mm und das Gitter ($G_{13}$) eine Gitterkonstante von 25,5 Linienpaaren / mm. Durch diese Anordnung lassen sich zwei geringfügig voneinander abweichende Sätze von Ebenen konstanter Phasendifferenz definieren, nämlich die Phasendifferenzen zwischen den paarweise nacheinander projizierten Gittern ($G_{11}$) und ($G_{12}$) und die Phasendifferenzen zwischen den paarweise nacheinander projizierten Gittern ($G_{13}$) und ($G_{14}$). Betrachtet man nun die Schwebungsfrequenz zwischen den beiden Sätzen von Ebenen konstanter Phasendifferenz, so läßt sich dieser eine effektive Wellenlänge

$$\lambda_{eff} = \frac{\lambda_1 \cdot \lambda_2}{\lambda_1 - \lambda_2}$$

zuordnen, die sehr viel größer ist als die den Flächen gleicher Phasendifferenz zugeordneten effektiven Wellenlängen $\lambda_1$ bzw. $\lambda_2$. Durch Auswerten dieser Schwebungsfrequenz läßt sich die Vieldeutigkeit der Phasenmessung beseitigen, die auftritt, wenn nur mit zwei Gittern ($G_{11}$) und ($G_{12}$) gleicher Periode gearbeitet wird.

Die Formeln, die zur Auswertung der Streifenmuster dienen, die mit diesem Aufbau erzeugt werden, lassen sich leicht aus den anhand von Fig. 1 abgeleiteten Formeln gewinnen, indem nämlich von Gleichung (8) ausgegangen wird und man diese Gleichung für die beiden Gitterpaare ($G_{11}/G_{12}$) und ($G_{13}/G_{14}$) mit den beiden unterschiedlichen Periodizitäten ($P^1$) und ($P^2$) aufschreibt. Man erhält

$$z = \frac{(x_{op1} - x_{op2}) \cdot a}{\left(n_1{}^1 - n_2{}^1 + \delta_1{}^1 - \delta_2{}^1\right) \cdot p^1} \qquad (18)$$

$$z = \frac{(x_{op1} - x_{op2}) \cdot a}{\left(n_1{}^2 - n_2{}^2 + \delta_1{}^2 - \delta_2{}^2\right) \cdot p^2} \qquad (19)$$

oder

$$z = \frac{K}{\left(N^1 + \Delta^1\right)p^1} \qquad (20)$$

$$z = \frac{K}{\left(N^2 + \Delta^2\right)p^2} \qquad (21)$$

wobei K eine Gerätekonstante
und $N^1 = n_1{}^1 - n_2{}^1$, $N^2 = n_1{}^2 - n_2{}^2$
sowie $\Delta^1 = \delta_1{}^2 - \delta_2{}^2$ und $\Delta^2 = \delta_1{}^2 - \delta_2{}^2$ ist.
Hieraus ergibt sich

$$z = \left(N^2 - N^1 + \Delta^2 - \Delta^1\right) \frac{p^1 \cdot p^2}{p^1 - p^2} \qquad (22)$$

Diese Gleichung (22) beschreibt eine Funktion mit einer im Vergleich zu Gleichung (20) bzw. (21) sehr viel größerer effektiver Wellenlänge. Der Objektabstand z läßt sich hieraus in ganz ähnlicher Weise wie anhand von Fig. 5 beschrieben ermitteln, indem die Nachkommanteile der Phasen
$\delta_1{}^1, \delta_1{}^2, \delta_2{}^1, \delta_2{}^2$
der durch die vier Gitter ($G_{11}$) bis ($G_{14}$) projizierten Streifenmuster gemessen und entsprechend der Gleichung (22) ausgewertet werden.

Wesentlich ist, daß die vier Streifenmuster getrennt projiziert werden, so daß auf der Oberfläche des Kamerasensors (K) immer nur ein definiertes Streifenmuster entsteht und ausgewertet werden kann, sich also nicht die Intensitäten unterschiedlicher Streifenmuster überlagern und die Auswertung stören. Hierzu sind wie in Fig. 4 dargestellt die beiden Gitter ($G_{11}$) und ($G_{13}$) hinter der Projektionsoptik ($P_{11}$) auf die Flächen eines ersten Strahlteilerwürfels ($S_{11}$) aufgesetzt und die beiden Gitter ($G_{12}$) und ($G_{14}$) hinter der Projektionsoptik ($P_{12}$) auf die Flächen eines zweiten Strahlteilerwürfels ($S_{12}$) aufgesetzt. Beleuchtet werden die Gitterpaare ($G_{11}$) und ($G_{13}$) von zwei verschiedenen Lichtquellen ($L_{11}$) und ($L_{13}$) durch Farbfilter ($F_{11}$) und ($F_{13}$) hindurch, so daß Streifenmuster in unterschiedlicher Farbe entstehen, die von einer Farbkamera (K) getrennt verarbeitet werden können. Die Trennung des Gitterpaares ($G_{12}$, $G_{14}$) erfolgt auf die gleiche Weise mit Farbfiltern ($F_{12}$) und ($F_{14}$), die von zwei Lampen ($L_{12}$) und ($L_{14}$) beleuchtet werden.

Alternativ zu der beschriebenen Farbcodierung ist es natürlich auch möglich, die vier Gitter nacheinander im Zeitmultiplex durch eine entsprechende Ansteuerung der Lampen ($L_{11}$) bis ($L_{14}$) zu projizieren oder die Trennung der Streifenmuster polarisationsoptisch vorzunehmen.

## EP 0 445 618 B1

**Patentansprüche**

1. Verfahren zur Vermessung von Objektoberflächen wobei zur Vergrößerung des Meßbereiches in Richtung der Kameraachse (z) mehrere Streifenmuster ($G_1$, $G_2$, $G_3$) mit gleichen oder leicht unterschiedlichen Periodizitäten auf die Objektoberfläche (O) projiziert werden, die an der Objektoberfläche (O) deformierten Streifenmuster von einer Kamera (K) aufgenommen und die aufgenommenen Streifenmuster ausgewertet werden, dadurch gekennzeichnet, daß die aufgenommenen Steifenmuster voneinander getrennt einem Bildverarbeitungsrechner zugeführt werden, daß in dem Bildverarbeitungsrechner aus den aufgenommenen Streifenmustern mindestens zwei Schwebungsfrequenzen mit sehr unterschiedlichen effektiven Wellenlängen gewonnen werden und daß der Objektabstand (z) anhand der mindestens zwei Schwebungsfrequenzen ermittelt wird.

2. Verfahren nach Anspruch 1, dadurch gekennzeichnet, daß die Schwebungsfrequenzen im Rechner erzeugt werden, indem die Differenzen ( $\Delta_1$, $\Delta_2$, $\Delta_3$) der Streifenphasen ($\delta_1$, $\delta_2$, $\delta_3$) der aufgenommenen Streifenmuster gebildet werden.

3. Verfahren nach Anspruch 1, dadurch gekennzeichnet, daß drei Gitter ($G_1$, $G_2$, $G_3$) gleicher Periodizität unter verschiedenen Winkeln ($\alpha_1$, $\alpha_2$) auf das Objekt projiziert werden.

4. Verfahren nach Anspruch 3, dadurch gekennzeichnet, daß die drei Gitter ($G_1$, $G_2$, $G_3$) in einer gemeinsamen Ebene angeordnet sind.

5. Verfahren nach Anspruch 1, dadurch gekennzeichnet, daß die Streifenmuster durch zwei Projektoren ($P_{11}$, $P_{12}$) projiziert werden, wobei jeder Projektor ($P_{11}$, $P_{12}$) jeweils zwei Gitter ($G_{11}$, $G_{13}$; $G_{12}$,$G_{14}$) leicht unterschiedlicher Periodizität enthält und wobei die beiden Gitter ($G_{11}$, $G_{13}$) des einen Projektors ($P_{11}$) die gleichen Periodizitäten wie die beiden Gitter ($G_{12}$,$G_{14}$) des anderen Projektors ($P_{12}$) aufweisen.

6. Vorrichtung zur Vermessung von Objektoberflächen mit Projektoren, die Streifenmuster gleicher Periodizität auf das Objekt (O) projizieren und einer Kamera (K), von der ein Bild der Objektoberfläche aufgenommen wird und der ein Bildverarbeitungsrechner nachgeschaltet ist, der aus den Videosignalen der Kamera (K) die Höheninformation (z) für die einzelnen Punkte der Objektoberfläche gewinnt, dadurch gekennzeichnet daß mindesten zwei Projektoren ($P_2$, $P_3$) vorhanden und unter einem gegenseitigen Winkel zueinander angeordnet sind, der klein gegenüber dem Winkel ist, den sie mit der Achse der Kamera (K) einschließen, daß die bei Projektion mit verschiedenen Projektoren ($P_2$, $P_3$) aufgezeichneten Kamerabilder getrennt dem Bildverarbeitungsrechner zugeführt sind und daß der Bildverarbeitungsrechner zur Erzeugung mindestens zweier Schwebungsfrequenzen mit sehr unterschiedlichen effektiven Wellenlängen aus den aufgezeichneten Kamerabildern und zur Berechnung des Objektabstandes (z) anhand dieser Schwebungsfrequenzen ausgebildet ist.

7. Vorrichtung nach Anspruch 6, dadurch gekennzeichnet, daß mindestens drei Projektoren ($P_1$, $P_2$, $P_3$) vorhanden sind, die Streifenmuster gleicher Periodizität projizieren, und daß die zur Projektion dienenden Gitter ($G_1$, $G_2$, $G_3$) auf einem gemeinsamen Träger (W) bzw. Substrat aufgebracht sind.

8. Vorrichtung nach Anspruch 7, dadurch gekennzeichnet, daß der Träger bzw. das Substrat relativ zur optischen Achse der Kamera (K) in der Ebene der Gitter ($G_1$, $G_2$, $G_3$) beweglich gelagert ist.

9. Vorrichtung zur Vermessung von Objektoberflächen mit mindestens einem Projektor, der Streifenmuster unterschiedlicher Periodizitäten auf das Objekt (O) projiziert und einer Kamera (K), von der ein Bild der Objektoberfläche aufgenommen wird und der ein Bildverarbeitungsrechner nachgeschaltet ist, der aus den Videosignalen der Kamera (K) die Höheninformation (z) für die einzelnen Punkte der Objektoberfläche gewinnt, dadurch gekennzeichnet, daß zwei Projektoren ($P_1$, $P_2$) vorhanden sind, daß jeder der beiden Projektoren jeweils zwei Gitter ($G_{11}$, $G_{13}$ / $G_{12}$, $G_{14}$) leicht unterschiedlicher Gitterperiodizität enthält und getrennt projiziert, wobei die Gitterperiodizitäten der Gitter ($G_{11}$, $G_{13}$) des einen Projektors ($P_1$) paarweise gleich mit den Gitterperiodizitäten der beiden Gitter ($G_{12}$, $G_{14}$) des anderen Projektors ($P_2$) sind, daß die an der Objektoberfläche deformierten und mit der Kamera (K) aufgenommenen Streifenmuster getrennt dem Bildverarbeitungsrechner zugeführt sind und daß der Bildverarbeitungsrechner zur Erzeugung mindestens zweier Schwebungsfrequenzen mit sehr unterschiedlichen effektiven Wellenlängen aus den aufgenommenen Kamerabildern und zur Berechnung des Objektabstandes (z) anhand dieser Schwebungsfrequenzen ausgebildet ist.

10. Vorrichtung nach Anspruch 9, dadurch gekennzeichnet, daß die Projektoren Farbteiler ($F_{11}/F_{12}$, $F_{13}/F_{14}$) zur Trennung der Streifenmuster enthalten und die Kamera (K) als Farbkamera ausgebildet ist.

**Claims**

1. Method for measuring object surfaces whereby, for enlarging the measurement range in the direction of the camera axis (z), several fringe patterns ($G_1$, $G_2$, $G_3$) having the same or slightly different periods are projected onto the object surface (O), whereby the fringe patterns, being deformed at the object surface (O), are recorded by a camera (K) and whereby the recorded fringe patterns are evaluated, characterized by the fact that the recorded fringe patterns are fed to an image evaluating computer separately from another, that the image evaluating computer calculates, by the aid of the recorded fringe patterns, at least two beat frequencies having considerably different effective wavelengths and that the object distance (z) is calculated by the aid of the at least two beat frequencies.

2. Method of claim 1, characterized by the fact that the beat frequencies are generated by the computer by calculating the differences ($\Delta_1$, $\Delta_2$, $\Delta_3$) of the fringe phases ($\delta_1$, $\delta_2$, $\delta_3$) of the recorded fringe patterns.

3. Method of claim 1, characterized by the fact that three gratings ($G_1$, $G_2$, $G_3$) of same periodicity are projected at different inclined angels ($\alpha_1$, $\alpha_2$) onto the object.

4. Method of claim 3, characterized by the fact that the three gratings ($G_1$, $G_2$, $G_3$) are positioned on a common plane.

5. Method of claim 1, characterized by the fact that the fringe patterns are projected by two projectors ($P_{11}$, $P_{12}$), whereby each projector ($P_{11}$, $P_{12}$) comprises two gratings ($G_{11}$, $G_{13}$; $G_{12}$, $G_{14}$) of slightly different periodicity and whereby both gratings ($G_{11}$, $G_{13}$) of one of the projectors ($P_{11}$) have the same periodicity as both gratings ($G_{12}$, $G_{14}$) of the other projector ($P_{12}$).

6. Apparatus for measuring object surfaces comprising projectors which project fringe patterns having the same periodicity onto the object (O), a camera (K) which records an image of the object surface and an image evaluating computer connected to the camera (K) which image evaluating computer calculates the height (z) of the object for the individual points of the object surface from the video signal of the camera (K), characterized by the fact that at least two projectors ($P_2$, $P_3$) are provided which are arranged at an angle with respect to another which angle is small compared to the angle between each projector and the axis of the camera (K), that the camera images associated with projections of different projectors ($P_2$, $P_3$) are fed to the image evaluating computer separately and that the image evaluating computer is configured for generating at least two beat frequencies of considerably different effective wavelengths from the recorded camera images and for calculating the object distance said by the aid of this beat frequencies.

7. Apparatus of claim 6, characterized by the fact that at least three projectors ($P_1$, $P_2$, $P_3$) are provided which project fringe images of the same periodicity and that the gratings ($G_1$, $G_2$, $G_3$) used for projection are positioned on a common support (W).

8. Apparatus of claim 7, characterized by the fact that the support is moveable relative to the optical axis of the camera (K) in the plane of the gratings ($G_1$, $G_2$, $G_3$).

9. Apparatus for measuring object surfaces comprising at least one projector which projects fringe patterns of different periodicity onto the object (O), a camera (K) which records an image of the object surface and to which an image evaluating computer is connected, whereby the image evaluating computer calculates the height (z) of the object for the individual points of the object surface (O), characterized by the fact that two projectors ($P_1$, $P_2$) are provided, that each of both projectors comprises and projects two gratings ($G_{11}$, $G_{13}$ / $G_{12}$, $G_{14}$) of slightly different periodicity, whereby the grating periodicity of the gratings ($G_{11}$, $G_{13}$) of one projector ($P_1$) are by pairs equal to the grating periodicity of the gratings ($G_{12}$, $G_{14}$) of the other projector ($P_2$), that the fringe patterns being deformed at the object surface and being recorded by the camera (K) are fed to the image evaluating computer separately and that the image evaluating computer is configured for generating at least two beat frequencies of considerably different effective wavelength from the recorded camera images and for calculating the object distance (z) by the aid of this beat frequencies.

10. Apparatus of claim 9, characterized by the fact that the projectors comprise colour-dividing elements ($F_{11}/F_{12}$, $F_{13}/F_{14}$) for distinguishing the fringe patterns and that the camera (K) is a colour camera.

**Revendications**

1. Procédé pour mesurer les surfaces d'objets, sur lequel, pour augmenter la plage de mesure dans la direction de l'axe (z) de la caméra, on projette plusieurs mires de barres ($G_1$, $G_2$, $G_3$) à une périodicité égale ou légèrement différente sur la surface (O) de l'objet, ces mires de barres, déformées par la surface (O) de l'objet étant prises par une caméra (K) et les mires de barres ainsi prises sont exploitées, procédé caractérisé en ce que les mires de barres, prises sont appliquées séparément les unes des autres à un calculateur de traitement d'image, et celui-ci, partant des mires de barres, prises donne au moins deux fréquences de battement de longueurs d'ondes effectives très différentes et en ce qu'on détermine la distance (z) de l'objet à l'aide d'au moins deux fréquences de battement.

2. Procédé selon la revendication 1, caractérisé en ce que les fréquences de battement sont créées dans le calculateur en formant les différences ($\Delta_1$, $\Delta_2$, $\Delta_3$) des phases de barres ($\delta_1$, $\delta_2$, $\delta_3$) des mires de barres prises.

3. Procédé selon la revendication 1, caractérisé en ce que l'on projette trois réseaux ($G_1$, $G_2$, $G_3$) de même périodicité suivant des angles ($\alpha_1$, $\alpha_2$) différents sur l'objet.

4. Procédé selon la revendication 3, caractérisé en ce qu'on place les trois réseaux ($G_1$, $G_2$, $G_3$) dans un plan commun.

5. Procédé selon la revendication 1, caractérisé en ce qu'on projette les mires de barres à l'aide de deux projecteurs ($P_{11}$, $P_{12}$), chaque projecteur ($P_{11}$, $P_{12}$) ayant deux réseaux ($G_{11}$, $G_{13}$ ; $G_{12}$, $G_{14}$) de périodicité légèrement différente et deux réseaux ($G_{11}$, $G_{13}$) d'un projecteur ($P_{11}$) ayant la même périodicité que les deux réseaux ($G_{12}$, $G_{14}$) de l'autre projecteur ($P_{12}$).

6. Dispositif pour mesurer des surfaces d'objets à l'aide de projecteurs qui projettent des mires de barres de même périodicité sur l'objet (O) et d'une caméra (K) qui prend leur image à la surface de l'objet et d'un calculateur de traitement d'image qui détermine l'information de hauteur (z) des différents points de la surface de l'objet à partir des signaux vidéo de la caméra (K), dispositif caractérisé par au moins deux projecteurs ($P_2$, $P_3$) et qui sont associés suivant un angle relatif petit par rapport à l'angle qu'elles font par rapport à l'axe de la caméra (K), les images de caméra enregistrées pour la projection par des projecteurs différents ($P_2$, $P_3$) étant appliquées séparément au calculateur de traitement d'image et en ce que ce calculateur crée au moins deux fréquences de battement différentes avec des longueurs d'ondes effectives différentes à partir des images de caméra enregistrées et est conçu pour calculer la distance (z) de l'objet à l'aide de ces fréquences de battement.

7. Dispositif selon la revendication 6, caractérisé par au moins trois projeteurs ($P_1$, $P_2$, $P_3$) qui projettent des mires de barres de même périodicité et en ce que les réseaux ($G_1$, $G_2$, $G_3$) servant à la projection sont montés sur un même support (W) ou substrat commun.

8. Dispositif selon la revendication 7, caractérisé en ce que le support ou le substrat est mobile par rapport à l'axe de la caméra (K) dans le plan des réseaux ($G_1$, $G_2$, $G_3$).

9. Dispositif pour mesurer les surfaces d'objets à l'aide d'au moins un projecteur qui projette des mires de barres de périodicité différente sur l'objet (O) et d'une caméra (K) qui prend une image de la surface de l'objet, ainsi que d'un calculateur de traitement d'image qui, partant des signaux vidéo de la caméra (K), donne l'information de hauteur (z) des différents points de la surface de l'objet, dispositif caractérisé par deux projecteurs ($P_1$, $P_2$) et à chacun des deux projecteurs sont associés deux réseaux

($G_{11}$, $G_{13}$/$G_{12}$, $G_{14}$) à périodicité de réseau légèrement différence, et on les projette séparément, la périodicité dès réseaux ($G_{11}$ ; $G_{13}$) d'un projecteur ($P_1$) étant égale par paire à la périodicité des deux réseaux ($G_{12}$, $G_{14}$) de l'autre projecteur ($P_2$), les mires de barres déformées par la surface de l'objet et prises en vue par la caméra (K) étant appliquées séparément au calculateur de traitement d'image qui est réalisé pour créer au moins deux fréquences de battement à longueurs d'ondes effectives très différentes à partir des images prises par la caméra et pour calculer la distance de l'objet (Z) à l'aide de ces fréquences de battement.

10. Dispositif selon la revendication 9, caractérisé en ce que les projecteurs comportent des diviseurs de couleurs ($F_{11}$/$F_{12}$, $F_{13}$/$F_{14}$) pour séparer les mires de barres et la caméra (K) est une caméra en couleurs.

Fig.1

Fig. 2

EP 0 445 618 B1

Fig.3

Fig.4

# Fig. 5a

EP 0 445 618 B1

Fig. 5b